# EUROPÄISCHE PATENTANMELDUNG

(11) **EP 4 137 281 A1**
(43) Veröffentlichungstag der Anmeldung: **22.02.2023**
(21) Anmeldenummer: 21192160.6
(22) Anmeldetag: 19.08.2021
(51) Int. Cl.: B25J 15/00, B65G 61/00, B25J 15/06, B65G 47/90, B65G 47/91, B65G 59/02

(54) **PALETTIEREN UND/ODER DEPALETTIEREN**

(71) Anmelder: Swisslog AG, 5033 Buchs/Aarau (CH); Genossenschaft Migros Aare, 3321 Schönbühl (CH)
(72) Erfinder: Joller, Franz, 8910 Affoltern a/A (CH); Meier, Roland, 8910 Affoltern a/A (CH); Kamm, Urs, 8910 Affoltern a/A (CH)
(74) Vertreter: Schlotter, Alexander Carolus Paul

(57) **Zusammenfassung**

Ein Greifer zum Palettieren und/oder Depalettieren von Gebinden (3A-3E) mittels eines Roboters (100) weist eine Tragstruktur (1) und eine Schaufel (2) auf, die relativ zu der Tragstruktur in einer Unterfahrrichtung reversibel verstellbar ist, um wenigstens ein Gebinde, insbesondere einen Gebindestapel (3A-3E), in einer Abstützrichtung quer zu der Unterfahrrichtung abzustützen. Der Greifer weist weiter auf: a) eine Stempelanordnung mit einem ersten Stempel (4A), der relativ zu der Tragstruktur in der Abstützrichtung reversibel verstellbar ist; b) eine Saugeranordnung mit einem ersten Sauger (5A), um quer zu der Abstützrichtung eine erste Saugseite (31) des Gebindes bzw. Gebindestapels anzusaugen; und/oder c) eine Seitenbackenanordnung mit einer ersten Seitenbacke (6A), die relativ zu der Tragstruktur in einer ersten Abdeckrichtung reversibel verstellbar ist; und einer zweiten Seitenbacke (6B), die relativ zu der Tragstruktur in einer zweiten Abdeckrichtung quer zu der ersten Abdeckrichtung reversibel verstellbar ist.

## Beschreibung

Die vorliegende Erfindung betrifft einen Greifer, ein Robotersystem sowie Verfahren zum Palettieren und/oder Depalettieren von Gebinden.

Aufgabe der vorliegenden Erfindung ist es, das Palettieren und/oder Depalettieren von Gebinden zu verbessern.

Diese Aufgabe wird durch einen Greifer mit den Merkmalen des Anspruchs 1 bzw. ein Verfahren mit den Merkmalen des Anspruchs 5, 6 bzw. 10 gelöst. Anspruch 4 stellt ein Robotersystem mit einem hier beschriebenen Greifer, insbesondere zur Durchführung eines hier beschriebenen Verfahrens, unter Schutz, wobei ein erfindungsgemäßes Verfahren in einer Ausführung mit einem hier beschriebenen Greifer, insbesondere Robotersystem, durchgeführt wird. Die Unteransprüche betreffen vorteilhafte Weiterbildungen.

Nach einer Ausführung der vorliegenden Erfindung weist ein (Roboter)Greifer, der zum Palettieren und/oder Depalettieren von Gebinden mittels eines Roboters eines Robotersystems vorgesehen, insbesondere eingerichtet ist bzw. verwendet wird, auf:
- eine, in einer Ausführung (beim Palettieren und/oder Depalettieren) obenliegende und/oder seitliche, Tragstruktur, die in einer Ausführung, insbesondere lösbar und/oder mit bzw. an einer (beim Palettieren und/oder Depalettieren) obenliegenden oder seitlichen Anschlussfläche der Tragstruktur, an dem Roboter befestigt bzw. hierzu eingerichtet ist bzw. verwendet wird; und
- eine Schaufel, die relativ zu der Tragstruktur in einer, in einer Ausführung beim Palettieren und/oder Depalettieren horizontalen, Unterfahrrichtung reversibel verstellbar ist, um wenigstens ein Gebinde, in einer Ausführung einen Gebindestapel, in der Unterfahrrichtung wenigstens teilweise zu unterfahren und das bzw. den wenigstens teilweise unterfahrene(n) Gebinde(stabel) in einer, in einer Ausführung beim Palettieren und/oder Depalettieren vertikalen, Abstützrichtung quer zu der Unterfahrrichtung abzustützen. Der Gebindestapel weist in einer Ausführung zwei oder mehr in der Abstützrichtung aufeinander angeordnete Gebinde auf, kann insbesondere hieraus bestehen.

Eine seitliche (Anschlussfläche zur) Befestigung am Roboter ermöglicht in einer Ausführung eine größere Arbeitshöhe, eine - besonders bevorzugte - obenliegende (Anschlussfläche zur) Befestigung am Roboter in einer Ausführung eine statisch bzw. lastmäßig besonders vorteilhafte Anbindung.

Die Erfindung ist, wie nachfolgend noch weiter erläutert, zum sukzessiven, insbesondere alternierenden, Palettieren und/oder Depalettieren von Gebinden mit verschiedenen Längen und/oder Breiten und/oder von Gebinden mit wiederverwendbaren Ladungsträgern, insbesondere aus Kunststoff, Metall oder dergleichen, und/oder Gebinden mit nicht wiederverwendbaren Ladungsträgern, insbesondere aus Pappe, Holz oder dergleichen, geeignet, wird vorzugsweise hierzu verwendet, ohne hierauf beschränkt zu sein. In einer Ausführung ist ein wiederverwendbarer Ladungsträger aus Kunststoff, Metall oder dergleichen hergestellt und/oder ein Mehrweg-Ladungsträger und/oder stabiler als ein nicht wiederverwendbarer Ladungsträger. Ein nicht wiederverwendbarer Ladungsträger ist in einer Ausführung aus Pappe, Holz oder dergleichen hergestellt und/oder ein Einweg-Ladungsträger.

Nach einer Ausführung der vorliegenden Erfindung weist der Greifer weiter auf:
eine Stempelanordnung mit einem ersten Stempel, der relativ zu der Tragstruktur in der Abstützrichtung reversibel verstellbar ist, um einen, in einer Ausführung (beim Palettieren und/oder Depalettieren) obenliegenden, ersten Seitenrand des Gebindes bzw. Gebindestapels gegensinnig zu der Abstützrichtung anzudrücken, insbesondere gegen ein darunterliegendes Gebinde oder eine darunterliegende Bodenfläche.

Dadurch kann in einer Ausführung das Gebinde bzw. der Gebindestapel vorteilhaft in Richtung einer Außenseite des Gebindes bzw. Gebindestapels gekippt und dadurch mit der Schaufel wenigstens teilweise unterfahren bzw. die Schaufel in den sich durch das Kippen ergebenden Freiraum unter dem Gebinde(stapel) eingefahren werden. In einer Ausführung wird das Gebinde bzw. der Gebindestapel dabei um eine Unterkante gekippt, die auf der gleichen Außenseite liegt wie der erste Seitenrand.

Dies ist besonders bei wiederverwendbaren Ladungsträgern vorteilhaft, da diese stabil(er als nicht wiederverwendbare Ladungsträger) sind. In einer Ausführung sind die wiederverwendbaren Ladungsträger, die mithilfe der Stempelanordnung gekippt werden, in vertikaler Richtung ineinander verschachtelt. In einer Ausführung unterstützt die Verschachtelung der Ladungsträger ineinander (in vertikaler Richtung) deren Stabilität zusätzlich. Eine solche Verschachtelung ist bei nicht wiederverwendbaren Ladungsträgern schwierig oder nicht möglich, so dass das nachfolgend noch näher beschriebene Depalettieren mit Kippen des Greifers besonders bevorzugt für wiederverwendbare Ladungsträger verwendet wird bzw. vorteilhaft ist.

Vorzugsweise wird das Gebinde bzw. der Gebindestapel über bzw. um eine untere Kante auf der Seite des ersten Seitenrands bzw. zum ersten Seitenrand hin gekippt. Zusätzlich oder alternativ sind in einer Ausführung der erste Seitenrand und/oder diese untere Kante parallel zur Unterfahrrichtung.

In einer Ausführung weist die Stempelanordnung einen zweiten Stempel auf, der relativ zu der Tragstruktur in der Abstützrichtung reversibel verstellbar ist, um einen an den ersten Seitenrand angrenzenden, insbesondere gegen diesen abgewinkelten, zweiten Seitenrand des Gebindes bzw. Gebindestapels gegensinnig zu der Abstützrichtung anzudrücken, insbesondere gegen das darunterliegende Gebinde bzw. die darunterliegende Bodenfläche.

Dadurch kann in einer Ausführung das Gebinde bzw. der Gebindestapel besonders vorteilhaft, insbesondere sicher(er), in Richtung der Außenseite des Gebindes bzw. Gebindestapels gekippt werden

Alternativ oder besonders bevorzugt zusätzlich zu der Stempelanordnung weist der Greifer nach einer Ausführung der vorliegenden Erfindung weiter auf:
eine Saugeranordnung mit einem, in einer Ausführung relativ zu der Tragstruktur in einer ersten, in einer Ausführung beim Palettieren und/oder Depalettieren horizontalen, Zustellrichtung quer zu der Abstützrichtung reversibel verstellbaren, ersten Sauger, um quer zu der Abstützrichtung eine erste Saugseite des Gebindes bzw. Gebindestapels anzusaugen.

Dadurch kann in einer Ausführung das (angesaugte) Gebinde bzw. der (angesaugte) Gebindestapel vorteilhaft angehoben und/oder in Richtung einer Außenseite des Gebindes bzw. Gebindestapels gekippt und dadurch mit der Schaufel wenigstens teilweise unterfahren bzw. die Schaufel in den sich durch das Anheben bzw. Kippen ergebenden Freiraum unter dem Gebinde(stapel) eingefahren werden. In einer Ausführung wird bzw. ist der durch die Saugeranordnung angesaugte Gebindestapel vor und/oder während des Anhebens nicht oder um höchstens 30°, insbesondere höchstens 15°, in einer Ausführung höchstens 10°, gekippt. Dadurch kann in einer Ausführung ein Auseinanderfallen oder Verrutschen des Gebindestapels vermieden werden.

Ein Anheben ist besonders bei nicht wiederverwendbaren Ladungsträgern vorteilhaft, da diese häufig nur eine geringe(re) Stabilität (als wiederverwendbare Ladungsträger) aufweisen und - im Falle von Stapeln mit nicht wiederverwendbaren Ladungsträgern - nicht ineinander verschachtelt sind. Entsprechend sind in einer Ausführung die nicht wiederverwendbaren Ladungsträger, die mithilfe der Saugeranordnung angehoben und/oder, vorzugsweise nicht oder um höchstens 30°, insbesondere höchstens 15°, in einer Ausführung höchstens 10°, gekippt werden, in vertikaler Richtung nicht ineinander verschachtelt. An der Außenseite üblicher nicht wiederverwendbarer Ladungsträger kann aufgrund ihrer Oberflächenstruktur und ihrer Materialbeschaffenheit, beispielsweise Pappe oder dergleichen, vorteilhaft Unterdruck bzw. ein Vakuum erzeugt werden, was bei wiederverwendbaren Ladungsträgern oft nicht der Fall ist.

Durch ein Verstellen in Zustellrichtung können in einer Ausführung Gebinde mit verschiedenen Längen und/oder Breiten vorteilhaft (de)palettiert und/oder der erste Sauger geschützt werden.

In einer Ausführung ist die erste Zustellrichtung parallel oder quer zu der Unterfahrrichtung.

In einer Ausführung weist die Saugeranordnung einen, in einer Ausführung relativ zu der Tragstruktur in einer zweiten, in einer Ausführung beim Palettieren und/oder Depalettieren horizontalen, Zustellrichtung quer zu der Abstützrichtung reversibel verstellbaren, zweiten Sauger auf, um quer zu der Abstützrichtung eine an die erste Saugseite angrenzende, insbesondere gegen diese abgewinkelte, zweite Saugseite des Gebindes bzw. Gebindestapels anzusaugen. In einer Ausführung ist die zweite Zustellrichtung quer zu der ersten Zustellrichtung. Zusätzlich oder alternativ ist in einer Ausführung die erste oder zweite Zustellrichtung parallel oder quer zu der Unterfahrrichtung.

Dadurch kann in einer Ausführung das Gebinde bzw. der Gebindestapel besonders vorteilhaft, insbesondere sicher(er), angehoben und/oder gekippt werden. In einer Ausführung kann durch (eine Saugeranordnung mit einem ersten und einem zweiten Sauger zum) Ansaugen einer ersten bzw. zweiten Saugseite des Gebindes bzw. Gebindestapels eine (übermäßige) Durchbiegung der Grundfläche des Gebinde(stapels) vermieden werden, die bei einem Ansaugen nur einer Saugseite auftreten kann.

In einer Ausführung wird zunächst der erste Sauger und erst anschließend der zweite Sauger aktiviert bzw. zunächst die erste Saugseite und erst anschließend die zweite Saugseite angesaugt. Zusätzlich oder alternativ sind in einer Ausführung die erste Saugseite und/oder zweite Saugseite jeweils Außenseiten des Gebindes bzw. Gebindestapels. Dadurch kann in einer Ausführung das Gebinde bzw. der Gebindestapel besonders vorteilhaft, insbesondere sicher(er), angesaugt und/oder gekippt bzw. angehoben werden.

Zusätzlich oder alternativ weist die Saugeranordnung in einer Ausführung einen, in einer Ausführung relativ zu der Tragstruktur in der ersten Zustellrichtung reversibel verstellbaren, dritten Sauger auf, um die erste Saugseite bei Bedarf quer zu der Abstützrichtung zusätzlich zu dem ersten Sauger anzusaugen.

Dadurch können in einer Ausführung Gebinde mit verschiedenen Längen und/oder Breiten vorteilhaft (de)palettiert werden.

Alternativ oder besonders bevorzugt zusätzlich zu der Stempel- und/oder der Saugeranordnung weist der Greifer nach einer Ausführung der vorliegenden Erfindung weiter auf:
eine Seitenbackenanordnung mit
- einer ersten Seitenbacke, die relativ zu der Tragstruktur in einer, in einer Ausführung beim Palettieren und/oder Depalettieren horizontalen, ersten Abdeckrichtung reversibel verstellbar ist, um eine erste Seitenfläche des Gebindes bzw. Gebindestapels in der ersten Abdeckrichtung wenigstens teilweise zu übergreifen; und
- einer zweiten Seitenbacke, die relativ zu der Tragstruktur in einer, in einer Ausführung beim Palettieren und/oder Depalettieren horizontalen, zweiten Abdeckrichtung quer zu der ersten Abdeckrichtung reversibel verstellbar ist, um eine an die erste Seitenfläche angrenzende, insbesondere gegen diese abgewinkelte, zweite Seitenfläche des Gebindes bzw. Gebindestapels in der zweiten Abdeckrichtung wenigstens teilweise zu übergreifen. In einer Ausführung ist die zweite Abdeckrichtung quer zu der ersten Abdeckrichtung. Zusätzlich oder alternativ ist in einer Ausführung die erste oder zweite Abdeckrichtung parallel oder quer zu der Unterfahrrichtung.

Dadurch können in einer Ausführung Gebinde(stapel) beim Transport vorteilhaft (horizontal) gesichert werden.

In einer Ausführung ist die erste Seitenbacke relativ zu der Tragstruktur in einer ersten Spannrichtung quer zu der ersten Abdeckrichtung und/oder quer zur Abstützrichtung reversibel verstellbar, um das Gebinde bzw. den Gebindestapel in der ersten Spannrichtung gegen eine erste Abstützung einzuspannen, und die zweite Seitenbacke relativ zu der Tragstruktur in einer zweiten Spannrichtung quer zu der zweiten Abdeckrichtung und/oder quer zur Abstützrichtung reversibel verstellbar, um das Gebinde bzw. den Gebindestapel in der zweiten Spannrichtung gegen eine, in einer Ausführung relativ zu der Tragstruktur in der zweiten Spannrichtung reversibel verstellbare, zweite Abstützung einzuspannen.

Dadurch können in einer Ausführung Gebinde(stapel) beim Transport besonders vorteilhaft (horizontal) gesichert werden.

Zusätzlich oder alternativ kann hierdurch ein Herausziehen der Schaufel zum bzw. beim Palettieren verbessert, insbesondere erleichtert und/oder Gebinde dabei geschont, werden. In einer Ausführung werden hierzu zum Absetzen des Gebinde(stapels) zunächst die Schaufel unter dem Gebinde(stapel) herausgezogen und anschließend die Seitenbacken in der jeweiligen Spannrichtung entspannt, vorzugsweise drucklos geschaltet, so dass das Gebinde bzw. der Gebindestapel beim Herausziehen der Schaufel noch durch die Seitenbackenanordnung reibschlüssig gehalten wird bzw. ist und nach deren Entspannen in Spannrichtung herabgleitet.

Durch eine in der zweiten Spannrichtung reversibel verstellbare zweite Abstützung können in einer Ausführung Gebinde mit verschiedenen Längen und/oder Breiten vorteilhaft (de)palettiert werden.

In einer Ausführung ist an der Tragstruktur ein Träger in der Unterfahrrichtung reversibel verstellbar angeordnet.

An diesem Träger ist in einer Ausführung die Schaufel, vorzugsweise relativ zu dem Träger in der Unterfahrrichtung reversibel verstellbar, angeordnet. Zusätzlich oder alternativ ist an diesem Träger in einer Ausführung die zweite Abstützung, in einer Weiterbildung relativ zu dem Träger fest oder in der zweiten Spannrichtung reversibel verstellbar, angeordnet. Zusätzlich oder alternativ ist an diesem Träger in einer Ausführung der zweite Stempel in der Abstützrichtung reversibel verstellbar angeordnet. Zusätzlich oder alternativ ist an diesem Träger in einer Ausführung der zweite Sauger, vorzugsweise relativ zu dem Träger in der zweiten Zustellrichtung reversibel verstellbar, angeordnet.

Dadurch können in einer Ausführung Gebinde mit verschiedenen Längen und/oder Breiten besonders vorteilhaft (de)palettiert bzw. der Greifer an Gebinde mit verschiedenen Längen und/oder Breiten angepasst werden.

In einer Ausführung weist der Greifer einen oder mehrere, vorzugsweise elektrische, insbesondere elektromotorische, pneumatische und/oder hydraulische Antriebe auf, die die Schaufel, die Stempelanordnung, insbesondere den ersten und/oder zweiten Stempel, die Saugeranordnung, insbesondere den ersten und/oder zweiten und/oder dritten Sauger, die Seitenbackenanordnung, insbesondere die erste und/oder zweite Seitenbacke, und/oder die zweite Abstützung verstellen bzw. hierzu eingerichtet sind. Dabei können unterschiedliche Elemente, insbesondere Stempel, Sauger, Seitenbacken und Abstützungen, durch gleichartige oder verschiedenartige Antriebe verstellt werden.

In einer Ausführung ist ein hier beschriebener Greifer, in einer Ausführung lösbar, an einem Roboter, insbesondere dessen Endflansch, befestigt bzw. hierzu eingerichtet, weist in einer Ausführung einen entsprechenden Anschlussflansch auf, vorzugsweise an seiner Tragstruktur. Wie an anderer Stelle beschrieben, ist eine Anschlussfläche, in einer Ausführung eine Anschlussfläche des Anschlussflanschs, die an dem Roboter bzw. an der der Roboter befestigt wird bzw. ist bzw. die hierzu vorgesehen, insbesondere eingerichtet ist bzw. verwendet wird, eine seitliche oder besonders bevorzugt obenliegende Anschlussfläche. In einer Ausführung weist der Roboter einen mehrgelenkigen bzw. -achsigen Roboterarm auf, an dem, insbesondere dessen Endflansch, der Greifer in einer Ausführung angeordnet ist.

Nach einer Ausführung der vorliegenden Erfindung weist ein Verfahren zum Depalettieren von Gebinden, in einer Ausführung zum, vorzugsweise wechselnden, Depalettieren von Gebinden mit verschiedenen Längen und/oder Breiten und/oder Gebinden mit unterschiedlichen Ladungsträgern, insbesondere Gebinden mit wiederverwendbaren Ladungsträgern und/oder Gebinden mit nicht wiederverwendbaren Ladungsträgern, mittels eines hier beschriebenen Robotersystems den Schritt auf:
Anfahren einer Depalettierposition, in einer Ausführung auf einem (Quell- )Gebindeträger, insbesondere einer (Quell-)Palette, oder einem (Quell-)Fördermittel oder einem (Quell-)Stellplatz, mit dem, vorzugsweise unbeladenen, Greifer.

Unter einem Palettieren wird vorliegend allgemein insbesondere das Absetzen von Gebinden, insbesondere Gebindestapeln, auf Gebindeträgern, insbesondere Zielpaletten, oder Fördermitteln oder Stellplätzen verstanden, in einer Ausführung auf Basis eines Komissionierungsauftrags, unter einem Depalettieren entsprechend allgemein insbesondere das Aufnehmen von Gebinden, insbesondere Gebindestapeln, von Gebindeträgern, insbesondere Quellpaletten, oder Fördermitteln oder Stellplätzen, in einer Ausführung auf Basis eines, vorzugsweise des, Komissionierungsauftrags.

Nach einer Ausführung der vorliegenden Erfindung weist das Verfahren zum Depalettieren die Schritte auf:
Andrücken wenigstens eines Seitenrands wenigstens eines Gebindes, insbesondere Gebindestapels, gegensinnig zu der Abstützrichtung mit der Stempelanordnung, insbesondere Andrücken des ersten Seitenrands mit dem ersten Stempel und in einer Ausführung des zweiten Seitenrands mit dem zweiten Stempel; und
Kippen des Greifers in Richtung einer Außenseite des, insbesondere angedrückten, Gebindes bzw. Gebindestapels.

Diese Variante ist, wie auch an anderer Stelle erläutert, besonders bei wiederverwertbaren Ladungsträgern bevorzugt, insbesondere wenn diese in einer Weiterbildung (vertikal) ineinander verschachtelt sind und daher eine hohe Stabilität aufweisen.

Nach einer Ausführung der vorliegenden Erfindung weist das Verfahren zum Depalettieren die Schritte auf:
Ansaugen wenigstens einer Saugseite wenigstens eines Gebindes, insbesondere Gebindestapels, mit der Saugeranordnung quer zu der Abstützrichtung, insbesondere Ansaugen der ersten Saugseite mit dem ersten Sauger quer zu der Abstützrichtung und in einer Ausführung, besonders bevorzugt anschließend, der zweiten Saugseite mit dem zweiten Sauger quer zu der Abstützrichtung, wobei in einer Ausführung die erste Saugseite zusätzlich auch mit dem dritten Sauger angesaugt wird, insbesondere bei Gebinden mit einer längeren ersten Saugseite, wobei in einer Ausführung bei Gebinden mit einer demgegenüber kürzeren ersten Saugseite die erste Saugseite nicht mit dem dritten Sauger angesaugt wird; und
Kippen des Greifers in Richtung einer Außenseite des Gebindes bzw. Gebindestapels und/oder Anheben des Greifers, insbesondere bei angesaugtem Gebinde(stapel). In einer Ausführung wird der Greifer nach Aktivieren der Sauganordnung wenigstens solange, bis das bzw. der angesaugte und angehobene Gebinde bzw. Gebindestapel mit der Schaufel wenigstens teilweise unterfahren (worden) ist, nicht oder um höchstens 30°, insbesondere höchstens 15°, in einer Ausführung höchstens 10°, gekippt. Dadurch kann in einer Ausführung die Gefahr eines Verrutschens oder Auseinanderfallens des Gebindestapels reduziert werden.

Diese Variante ist, wie auch an anderer Stelle erläutert, besonders bei nicht wiederverwertbaren Ladungsträgern bevorzugt, insbesondere, wenn deren Saugseite(n) eine zum Ansaugen vorteilhafte Oberfläche aufweisen.

In einer Ausführung wird wahl- bzw. bedarfsweise, insbesondere gebindeabhängig und/oder wechselnd, mit der Stempelanordnung angedrückt und gekippt oder mit der Sauganordnung angesaugt und gekippt und/oder angehoben, insbesondere also beim Depalletieren eines Gebindes bzw. Gebindestapels, insbesondere mit ersten, in einer Ausführung wiederverwertbaren, Ladungsträgern, dessen Seitenrand bzw. Seitenränder angedrückt und bei einem nachfolgenden Depalletieren eines weiteren Gebinde bzw. Gebindestapels, insbesondere mit zweiten, in einer Ausführung nicht wiederverwertbaren, Ladungsträgern, dessen Außenseite(n) angesaugt und/oder umgekehrt beim Depalletieren eines Gebindes bzw. Gebindestapels, insbesondere mit zweiten, in einer Ausführung nicht wiederverwertbaren, Ladungsträgern, dessen Außenseite(n) angesaugt und bei einem nachfolgenden Depalletieren eines weiteren Gebinde bzw. Gebindestapels, insbesondere mit ersten, in einer Ausführung wiederverwertbaren, Ladungsträgern, dessen Seitenrand bzw. Seitenränder angedrückt.

Nach einer Ausführung der vorliegenden Erfindung weist das Verfahren zum Depalettieren die Schritte auf:
wenigstens teilweises Unterfahren des angehobenen bzw. gekippten Gebindes bzw. Gebindestapels in der Unterfahrrichtung mit der Schaufel, insbesondere also nach dem Andrücken oder Ansaugen und dem anschließenden Anheben bzw. Kippen; und Abtransportieren des Gebindes bzw. Gebindestapels mit dem Greifer.

In einer Ausführung wird das Gebinde bzw. der Gebindestapel bzw. die Depalettierposition von einer Außenecke des Gebindes bzw. Gebindestapels her angefahren.

Dadurch können in einer Ausführung Gebinde(stapel), in einer Ausführung sukzessive bzw. wechselnd Gebinde(stapel) mit verschiedenen Längen und/oder Breiten und/oder sowohl mit wiederverwendbaren Ladungsträgern als auch mit nicht wiederverwendbaren Ladungsträgern vorteilhaft, insbesondere schonend, zuverlässig und/oder schnell, automatisiert depalettiert werden.

In einer Ausführung wird nach dem Anheben bzw. Kippen des Greifers, insbesondere nach dem wenigstens teilweisen Unterfahren des Gebindes bzw. Gebindestapels in der Unterfahrrichtung mit der Schaufel, und/oder vor dem Abtransportieren des Gebindes bzw. Gebindestapels die erste Seitenbacke in der ersten Abdeckrichtung verstellt, um die erste Seitenfläche des Gebindes bzw. Gebindestapels wenigstens teilweise zu übergreifen, und die zweite Seitenbacke in der zweiten Abdeckrichtung verstellt, um die zweite Seitenfläche des Gebindes bzw. Gebindestapels wenigstens teilweise zu übergreifen.

Zusätzlich oder alternativ wird in einer Ausführung die erste Seitenbacke, insbesondere die die erste Seitenfläche wenigstens teilweise übergreifende erste Seitenbacke, in der ersten Spannrichtung verstellt, um das Gebinde bzw. den Gebindestapel in der ersten Spannrichtung gegen die erste Abstützung einzuspannen, und die zweite Seitenbacke, insbesondere die die zweite Seitenfläche wenigstens teilweise übergreifende zweite Seitenbacke, in der zweiten Spannrichtung quer zu der zweiten Abdeckrichtung verstellt, um das Gebinde bzw. den Gebindestapel in der zweiten Spannrichtung gegen die zweite Abstützung einzuspannen.

Dadurch können in einer Ausführung Gebinde(stapel) beim Transport vorteilhaft (horizontal) gesichert werden.

Nach einer Ausführung der vorliegenden Erfindung weist ein Verfahren zum Palettieren von Gebinden, in einer Ausführung zum, vorzugsweise wechselnden, Palettieren von Gebinden mit verschiedenen Längen und/oder Breiten und/oder Gebinden mit wiederverwendbaren Ladungsträgern und/oder Gebinden mit nicht wiederverwendbaren Ladungsträgern, mittels eines hier beschriebenen Robotersystems die Schritte auf:
Anfahren einer Palettierposition, insbesondere auf einem (Ziel-)Gebindeträger, insbesondere einer (Ziel-)palette, oder einem (Ziel-)Fördermittel oder einem (Ziel- )Stellplatz, mit dem mit wenigstens einem Gebinde, insbesondere Gebindestapel, beladenen Greifer;
Herausziehen der Schaufel entgegen der Unterfahrrichtung unter dem Gebinde bzw. Gebindestapel; und
Wegfahren des Greifers.

In einer Ausführung wird nach dem Herausziehen der Schaufel und vor dem Wegfahren des Greifers die erste Seitenbacke in der ersten Spannrichtung und die zweite Seitenbacke in der zweiten Spannrichtung entspannt, vorzugsweise drucklos geschaltet und/oder von dem Gebinde bzw. Gebindestapel beabstandet, um das Gebinde bzw. den Gebindestapel entgegen der Abstützrichtung abzusetzen.

Dadurch kann in einer Ausführung das Absetzen verbessert, insbesondere Schaufel und/oder Gebinde geschont und/oder Präzision, Zuverlässigkeit und/oder Geschwindigkeit erhöht werden.

In einer Ausführung wird, vorzugsweise nach diesem Entspannen, die erste Seitenbacke entgegen der ersten Abdeckrichtung und die zweite Seitenbacke entgegen der zweiten Abdeckrichtung verstellt, in einer Ausführung so, dass sie das Gebinde bzw. den Gebindestapel nicht mehr (wenigstens teilweise) überdecken.

Dadurch kann in einer Ausführung das Wegfahren, insbesondere ein seitliches Wegfahren, des Greifers verbessert werden.

Nach einer Ausführung der vorliegenden Erfindung weist ein Verfahren zum (Depalettieren und) Palettieren von Gebinden, insbesondere Gebinden mit verschiedenen Längen und/oder Breiten und/oder Gebinden mit wiederverwendbaren Ladungsträgern und/oder Gebinden mit nicht wiederverwendbaren Ladungsträgern, ein hier beschriebenes Depalettieren und ein daran, in einer Ausführung unmittelbar, anschließendes hier beschriebenes Palettieren auf.

Dabei wird in einer Ausführung der Greifer vor dem Anfahren der Palettierposition mit dem wenigstens einem Gebinde, insbesondere Gebindestapel, durch ein hier beschriebenes Depalettieren mit diesem Gebinde(stapel) beladen, wobei der Greifer in einer Ausführung dieses Gebinde bzw. diesen Gebindestapel nach diesem Depalettieren ohne zwischenzeitliches Abladen direkt bzw. unmittelbar an der Palettierposition, vorzugsweise auf den (Ziel-)Gebindeträger bzw. das (Ziel- )Fördermittel bzw. den (Ziel-)Stellplatz, palettiert.

Somit wird in einer Ausführung auf eine Zwischenpufferung der Gebinde verzichtet, in einer Weiterbildung Gebinde, insbesondere auf Basis einer vorgegebenen Kommissionierung, bevorzugt Kommissionierungsreihenfolge, und/oder in, vorzugsweise möglichst hohen, Gebindestapeln, direkt von einem oder mehreren Quell-Fördermitteln oder Quell-Stellplätzen oder besonders bevorzugt von einem oder mehreren Quell-Gebindeträgern, auf ein oder mehrere Ziel-Fördermittel oder Ziel-Stellplätze oder besonders bevorzugt einen oder mehrere Ziel-Gebindeträger umgesetzt.

Dadurch kann in einer Ausführung ein Kommissionieren beschleunigt werden, was besonders bei Frischware bzw. nicht konservierten Lebensmitteln, bevorzugt Frischobst und/oder Frischgemüse, besonders wichtig bzw. vorteilhaft ist. Allgemein weist in einer Ausführung das Gebinde bzw. der Gebindestapel Frischware, bevorzugt Frischobst und/oder Frischgemüse, auf, ohne dass die Erfindung hierauf beschränkt ist.

Zusätzlich oder alternativ wird der Greifer in einer Ausführung vor dem Anfahren der Palettierposition mit dem Gebinde, insbesondere Gebindestapel, an einem Abholplatz, welcher ein Unterfahren des Gebindes mit der Schaufel ohne hier beschriebenes Anheben und ohne hier beschriebenes Kippen ermöglicht, statt durch Depalettieren nach einem hier beschriebenen Verfahren beladen. Dadurch kann in einer Ausführung das Beladen beschleunigt werden.

In einer Ausführung wird der Ziel-Gebindeträger, insbesondere durch ein Fördermittel oder besonders bevorzugt ein fahrerloses Transportfahrzeug, nach einem hier beschriebenen Palettieren wenigstens eines Gebindes, insbesondere Gebindestapels, zu einem weiteren Roboter transportiert, wo, vorzugsweise in hier beschriebener Weise, durch den weiteren Roboter wenigstens ein weiteres Gebinde, insbesondere ein weiterer Gebindestapel, auf diesen Ziel-Gebindeträger palettiert wird. Zusätzlich oder alternativ kann in einer Ausführung auch der Quell-Gebindeträger, insbesondere durch ein Fördermittel oder besonders bevorzugt ein fahrerloses Transportfahrzeug nach dem Depalettieren wenigstens eines Gebindes, insbesondere Gebindestapels, in hier beschriebener Weise zu einem weiteren Roboter transportiert werden, wo, vorzugsweise in hier beschriebener Weise, durch den weiteren Roboter wenigstens ein weiteres Gebinde, insbesondere ein weiterer Gebindestapel, von diesem Quell-Gebindeträger depalettiert wird.

Dadurch kann in einer Ausführung die Flexibilität und/oder Geschwindigkeit einer Kommissionierung, die ein Depalettieren und ein Palettieren umfasst, erhöht werden. In einer Ausführung wird die zweite Abstützung in der zweiten Spannrichtung verstellt, um den Greifer an unterschiedliche Gebinde mit verschiedenen Längen und/oder Breiten anzupassen, insbesondere nach einem Absetzen eines Gebinde(stapel)s und vor dem Aufnehmen eines neuen Gebinde(stapels) mit einer anderen Länge und/oder Breite.

Dadurch können vorteilhaft unterschiedliche Gebinde (de)palettiert bzw. kommissioniert werden.

In einer Ausführung weist der erste Sauger und/oder der zweite Sauger und/oder der dritte Sauger (jeweils) mehrere Saugöffnungen, insbesondere, in einer Ausführung voneinander beabstandete und/oder separat(ausgebildete und/oder miteinander fluidverbundene, Saugdüsen oder dergleichen, auf.

Dadurch können in einer Ausführung Gebinde geschont und/oder eine Sicherheit erhöht werden.

In einer Ausführung werden eine oder mehrere Saugöffnungen der Saugeranordnung, insbesondere eine oder mehrere Saugöffnungen des ersten Saugers und/oder eine oder mehrere Saugöffnungen des zweiten Saugers und/oder eine oder mehrere Saugöffnungen des dritten Saugers, in einer Ausführung infolge einer Erfassung einer fehlenden Wirkfläche, deaktiviert.

Dadurch können in einer Ausführung unterschiedlich hohe, unterschiedlich lange und/oder unterschiedlich breite Gebinde bzw. Gebindestapel vorteilhaft angesaugt werden.

In einer Ausführung ist die Schaufel relativ zu der Tragstruktur in Abstützrichtung reversibel verstellbar und/oder wird nach dem Anheben bzw. Kippen des Greifers bei angedrücktem bzw. angesaugtem Gebinde(stapel) und/oder vor dem Abtransportieren des Gebindes bzw. Gebindestapels, insbesondere vor dem Verstellen der ersten Seitenbacke in der ersten Abdeckrichtung, um die erste Seitenfläche des Gebindes bzw. Gebindestapels wenigstens teilweise zu übergreifen, und der zweiten Seitenbacke in der zweiten Abdeckrichtung, um die zweite Seitenfläche des Gebindes bzw. Gebindestapels wenigstens teilweise zu übergreifen, in Abstützrichtung verstellt.

Dadurch kann in einer Ausführung ein weiteres Anheben bzw. Kippen des Gebindes bzw. Gebindestapels unterstützt und/oder die Wirkung der Stempel- und/oder Saugeranordnung unterstützt bzw. diese entlastet werden.

In einer Ausführung wird der Greifer nach dem wenigstens teilweisen Unterfahren des Gebindes bzw. Gebindestapels mit der Schaufel und/oder dem Verstellen der Schaufel in der Abstützrichtung noch weiter angehoben und/oder gekippt und/oder quer zur Abstützrichtung von der Depalettierposition entfernt, bevor die Seitenbacken die Seitenflächen wenigstens teilweise übergreifen, wodurch in einer Ausführung vorteilhafterweise die Saugeranordnung unterstützt bzw. entlastet und/oder das Verstellen der Seitenbacken erleichtert wird.

In einer Ausführung beträgt ein Winkel zwischen zwei Richtungen, die quer zueinander sind, wenigstens 45° und/oder höchstens 135°, insbesondere wenigstens 60° und/oder höchstens 120°, in einer Ausführung wenigstens 75° und/oder höchstens 105°, vorzugsweise wenigstens 85° und/oder höchstens 95°. Dabei können zwischen zwei Richtungen, die quer zueinander sind, und zwischen zwei anderen Richtungen, die ebenfalls quer zueinander sind, unterschiedliche Winkel vorliegen. Zusätzlich oder alternativ beträgt in einer Ausführung ein Winkel zwischen zwei gegeneinander abgewinkelten Seitenrändern und/oder zwischen zwei gegeneinander abgewinkelten Seitenflächen und/oder zwischen zwei gegeneinander abgewinkelten Saugseiten wenigstens 45° und/oder höchstens 135°, insbesondere wenigstens 60° und/oder höchstens 120°, in einer Ausführung wenigstens 75° und/oder höchstens 105°, vorzugsweise wenigstens 85° und/oder höchstens 95°. Dabei können wiederum unterschiedliche Winkel vorliegen.

Eine Außenseite des Gebindes bzw. Gebindestapels ist in einer Ausführung eine freie Seite, vorzugsweise Längs- oder Breitseite, wobei auf einer dieser Außenseiten gegenüberliegenden Seite jeweils ein oder mehrere weitere Gebinde bzw. Gebindestapel angeordnet bzw. vorhanden sein können. Entsprechend wird in einer Ausführung beim Depalettieren eine äußere bzw. freie Ecke des Gebindes bzw. Gebindestapels angefahren und vorzugsweise die beiden nicht an diese Ecke angrenzenden Seitenflächen des Gebindes bzw. Gebindestapels von der Seitenbackenanordnung beim Depalettieren wenigstens teilweise übergriffen und so, insbesondere horizontal, gesichert. Zusätzlich oder alternativ wird in einer Ausführung beim Palettieren ein freier Platz von einer äußeren bzw. freien Ecke dieses Platzes aus bzw. eine äußere bzw. freie Ecke dieses Platzes angefahren, wobei vorzugsweise die beiden nicht an diese Ecke angrenzenden Seitenflächen des Gebindes bzw. Gebindestapels von der Seitenbackenanordnung zunächst wenigstens teilweise übergriffen und so, insbesondere horizontal, gesichert sind.

In einer Ausführung werden ein oder mehrere, insbesondere alle, Schritte des Verfahrens vollständig oder teilweise automatisiert durchgeführt, insbesondere durch das Robotersystem.

Weitere Vorteile und Merkmale ergeben sich aus den Unteransprüchen und den Ausführungsbeispielen. Hierzu zeigt, teilweise schematisiert:
- Fig. 1:: einen Teil eines Robotersystems mit einem Greifer nach einer Ausführung der vorliegenden Erfindung in einer vertikalen Draufsicht;
- Fig. 2:: den Teil des Robotersystems mit dem Greifer in einer horizontalen Seitansicht;
- Fig. 3A-3E:: ein Depalettieren nach einer Ausführung der vorliegenden Erfindung;
- Fig. 4A-4F: ein Depalettieren nach einer Ausführung der vorliegenden Erfindung; und
- Fig. 5A-5D:: ein Palettieren nach einer Ausführung der vorliegenden Erfindung.

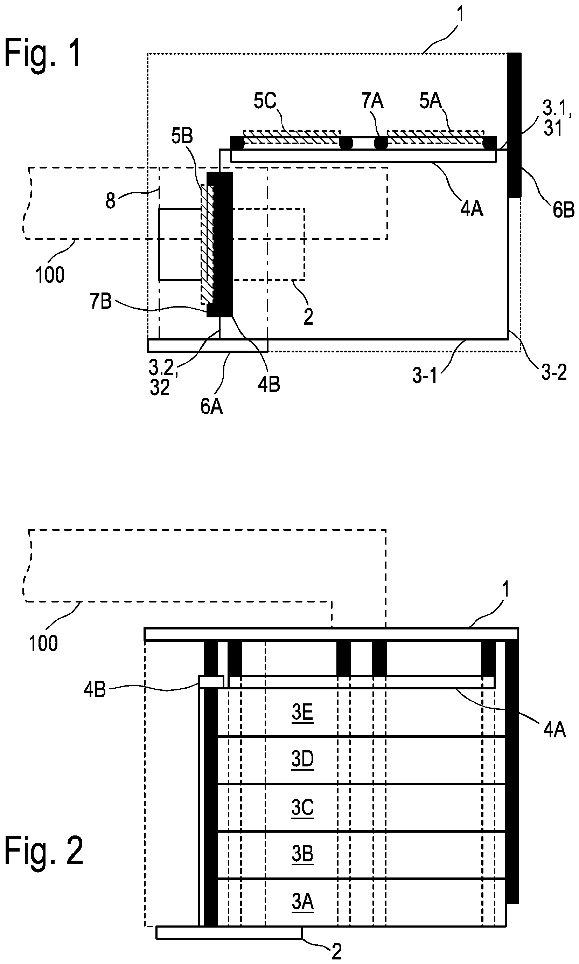

Fig. 1, 2 zeigen, teilweise schematisiert, einen Teil eines Robotersystems mit einem Greifer nach einer Ausführung der vorliegenden Erfindung in einer Drauf- bzw. Seitansicht.

Das Robotersystem weist einen Roboter(arm), von dem in Fig. 1, 2 nur ein Endbereich 100 dargestellt ist, und den daran angeordneten Greifer auf.

Der Greifer weist eine obenliegende Tragstruktur 1, die in Fig. 1 nur gestrichelt angedeutet ist, und eine Schaufel 2 auf, die relativ zu der Tragstruktur in einer horizontalen Unterfahrrichtung (horizontal in Fig. 1, 2) reversibel verstellbar ist, um ein Gebinde oder einen Gebindestapel 3A-3E in einer vertikalen Abstützrichtung (vertikal in Fig. 2) quer zu der Unterfahrrichtung abzustützen.

In einer nicht dargestellten Abwandlung kann die Tragstruktur 1 zusätzlich oder alternativ zu dem in Fig. 1, 2 gezeigten obenliegenden Bereich einen seitlichen Bereich aufweisen und/oder statt mit bzw. an einer obenliegenden Anschlussfläche (Oberseite der Tragstruktur 1 in Fig. 2) mit bzw. an einer seitlichen Anschlussfläche an dem Roboter bzw. dessen Endbereich 100 befestigt ist.

Der Greifer weist weiter eine Stempelanordnung mit einem ersten Stempel 4A, der in der Abstützrichtung reversibel verstellbar ist, um einen ersten Seitenrand 3.1 des Gebinde(stapel)s gegensinnig zu der Abstützrichtung, d.h. vertikal nach unten, anzudrücken, und einen zweiten Stempel 4B auf, der in der Abstützrichtung reversibel verstellbar ist, um einen an den ersten Seitenrand angrenzenden und gegen diesen abgewinkelten zweiten Seitenrand 3.2 des Gebinde(stapel)s gegensinnig zu der Abstützrichtung, d.h. vertikal nach unten, anzudrücken.

Der Greifer weist weiter eine Saugeranordnung mit einem ersten, in einer ersten Zustellrichtung (vertikal in Fig. 1) quer zu der Abstützrichtung reversibel verstellbaren, ersten Sauger 5A, um quer zu der Abstützrichtung eine erste Saugseite 31 des Gebinde(stapel)s anzusaugen (vertikal nach oben in Fig. 1), und einen, in einer zweiten Zustellrichtung (horizontal in Fig. 1) quer zu der Abstützrichtung reversibel verstellbaren, zweiten Sauger 5B, um quer zu der Abstützrichtung eine an die erste Saugseite angrenzende und gegen diese abgewinkelte zweite Saugseite 32 des Gebinde(stapel)s anzusaugen (horizontal nach links in Fig. 1), und einen in der ersten Zustellrichtung reversibel verstellbaren dritten Sauger 5C, um die erste Saugseite bei Bedarf zusätzlich zu dem ersten Sauger anzusaugen, auf.

Der Greifer weist weiter eine Seitenbackenanordnung mit einer erste Seitenbacke 6A, die relativ zu der Tragstruktur in einer ersten Abdeckrichtung (horizontal in Fig. 1) reversibel verstellbar ist, um eine erste Seitenfläche 3-1 des Gebinde(stapel)s in der ersten Abdeckrichtung wenigstens teilweise zu übergreifen, und eine zweite Seitenbacke 6B, die relativ zu der Tragstruktur in einer zweiten Abdeckrichtung (vertikal in Fig. 1) quer zu der ersten Abdeckrichtung reversibel verstellbar ist, um eine an die erste Seitenfläche angrenzende und gegen diese abgewinkelte zweite Seitenfläche 3-2 des Gebinde(stapel)s in der zweiten Abdeckrichtung wenigstens teilweise zu übergreifen, auf.

Die erste Seitenbacke 6A ist relativ zu der Tragstruktur in einer ersten Spannrichtung (vertikal in Fig. 1) quer zu der ersten Abdeckrichtung reversibel verstellbar, um den Gebindestapel in der ersten Spannrichtung gegen eine erste Abstützung 7A einzuspannen, und die zweite Seitenbacke 6B ist relativ zu der Tragstruktur in einer zweiten Spannrichtung (horizontal in Fig. 1) quer zu der zweiten Abdeckrichtung reversibel verstellbar ist, um den Gebindestapel in der zweiten Spannrichtung gegen eine in der zweiten Spannrichtung reversibel verstellbare zweite Abstützung 7B einzuspannen.

Zur übersichtlicheren Darstellung sind in Fig. 1, 2 Antriebe und Führungen zur Realisierung der hier beschriebenen Verstellungen nicht dargestellt. Mit 8 ist in Fig. 1 ein Träger strichpunktiert schematisch angedeutet, an dem die Schaufel 2 (in Unterfahrrichtung reversibel verstellbar), der zweite Sauger 5B (in der zweiten Zustellrichtung reversibel verstellbar) und die zweite Abstützung 7B angeordnet ist, die dadurch ihrerseits relativ zu der Tragstruktur 1 in der zweiten Spannrichtung reversibel verstellbar ist. In einer Abwandlung kann dieser Träger 8 auch entfallen und Schaufel 2, zweiter Sauger 5B und zweite Abstützung 7B direkt mit der Tragstuktur 1 verbunden bzw. relativ zu dieser verstellbar sein.

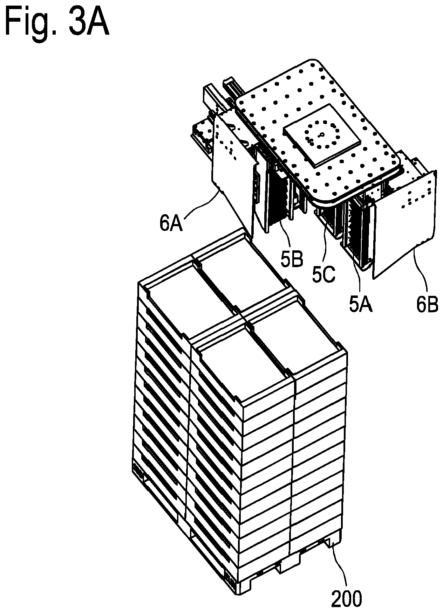

Fig. 3A-3E zeigen ein Depalettieren nach einer Ausführung der vorliegenden Erfindung.

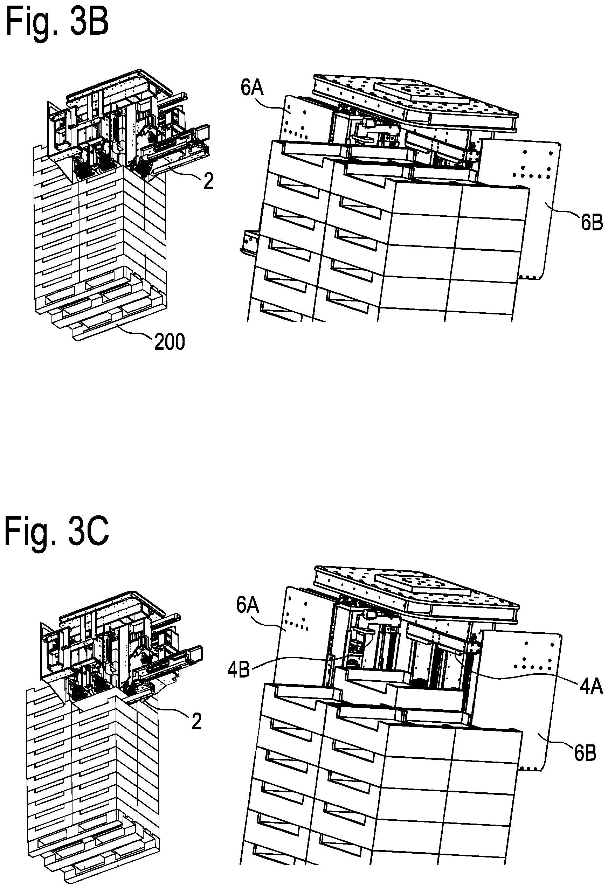

Zunächst wird mit dem unbeladenen Greifer eine Depalettierposition auf einem (Quell- )Gebindeträger 200 angefahren (Fig. 3A → Fig. 3B). Dabei sind die Seitenbacken 6A, 6B, die Schaufel 2 und die drei Sauger 5A-5C zurückgezogen und die Stempel 4A, 4B hochgezogen.

Dann werden zunächst die Sauger 5A, 5C in der ersten Zustellrichtung auf den Gebindestapel hin zugestellt und ihre Saugöffnungen aktiviert, und dann der Sauger 5B in der zweiten Zustellrichtung auf den Gebindestapel hin zugestellt und seine Saugöffnungen aktiviert. Saugöffnungen, die keine Wirkfläche finden, werden deaktiviert (Fig. 3B).

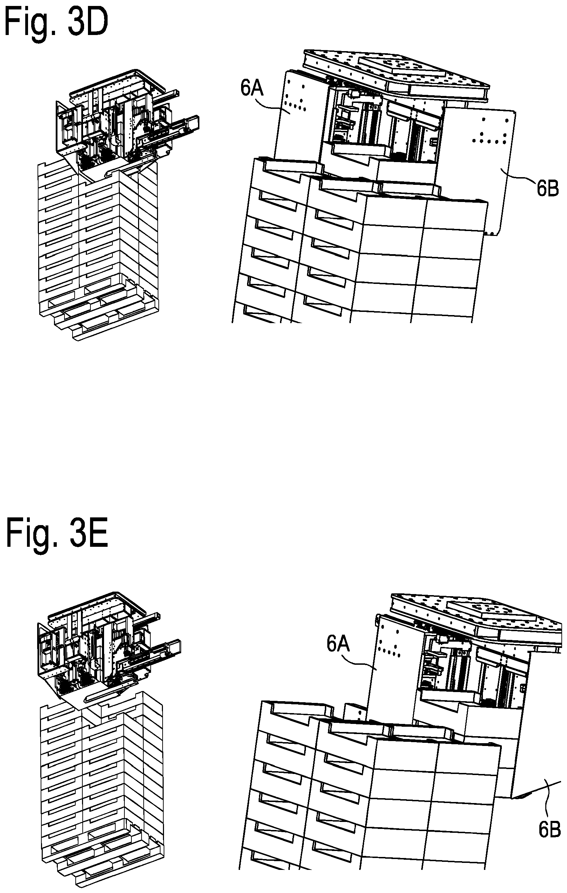

Nun wird der Greifer angehoben und anschließend der Gebindestapel in der Unterfahrrichtung mit der Schaufel 2 teilweise unterfahren (Fig. 3B → Fig. 3C). Anschließend wird die Schaufel 2 in Abstützrichtung verstellt, der Greifer weiter angehoben und quer zur Abstützrichtung von der Depalettierposition entfernt, die erste Seitenbacke 6A in der ersten Abdeckrichtung verstellt, um die erste Seitenfläche des Gebindestapels wenigstens teilweise zu übergreifen, die zweite Seitenbacke 6B in der zweiten Abdeckrichtung verstellt, um die zweite Seitenfläche des Gebindestapels wenigstens teilweise zu übergreifen, die erste Seitenbacke in der ersten Spannrichtung verstellt, um den Gebindestapel in der ersten Spannrichtung gegen die erste Abstützung einzuspannen, und die zweite Seitenbacke in der zweiten Spannrichtung quer zu der zweiten Abdeckrichtung verstellt, um den Gebindestapel in der zweiten Spannrichtung gegen die zweite Abstützung einzuspannen (Fig. 3C → Fig. 3E).

Dann werden die Sauger 5A-5C (vgl. Fig. 1) deaktiviert und der Gebindestapel mit dem Greifer abtransportiert (Fig. 3D → Fig. 3C).

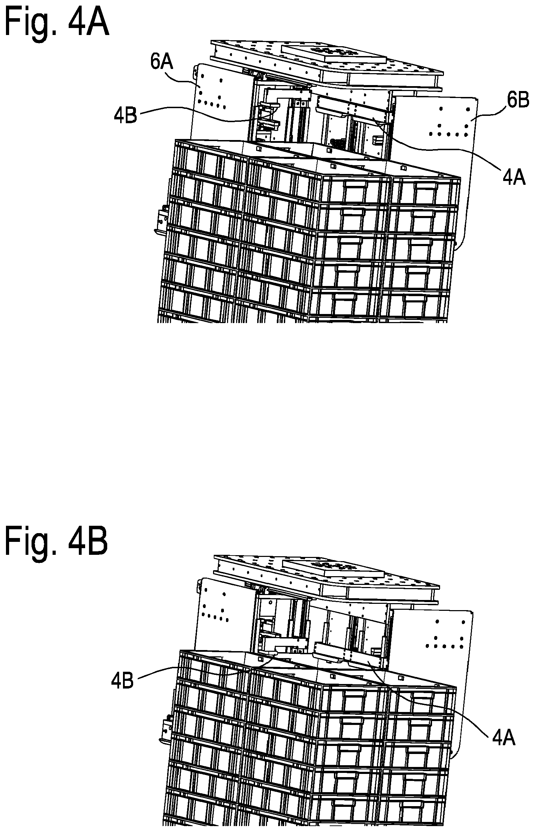

Fig. 4A-4F zeigen ebenfalls ein Depalettieren nach einer Ausführung der vorliegenden Erfindung.

Zunächst wird wiederum mit dem unbeladenen Greifer eine Depalettierposition auf einem (Quell-)Gebindeträger 200 angefahren. Dabei sind die Seitenbacken 6A, 6B entgegen ihrer jeweiligen Abdeckrichtung, die Schaufel 2 entgegen ihrer Unterfahrrichtung und die drei Sauger 5A-5C entgegen ihrer Zustellrichtung zurückgezogen und die Stempel 4A, 4B in der Abstützrichtung hochgezogen.

Dann werden die Stempel 4A, 4B gegensinnig zu der Abstützrichtung auf den Gebindestapel hin verstellt bzw. abgesenkt (Fig. 4A → Fig. 4B), um den ersten und zweiten Seitenrand des Gebindestapels gegensinnig zu der Abstützrichtung mit der Stempelanordnung anzudrücken.

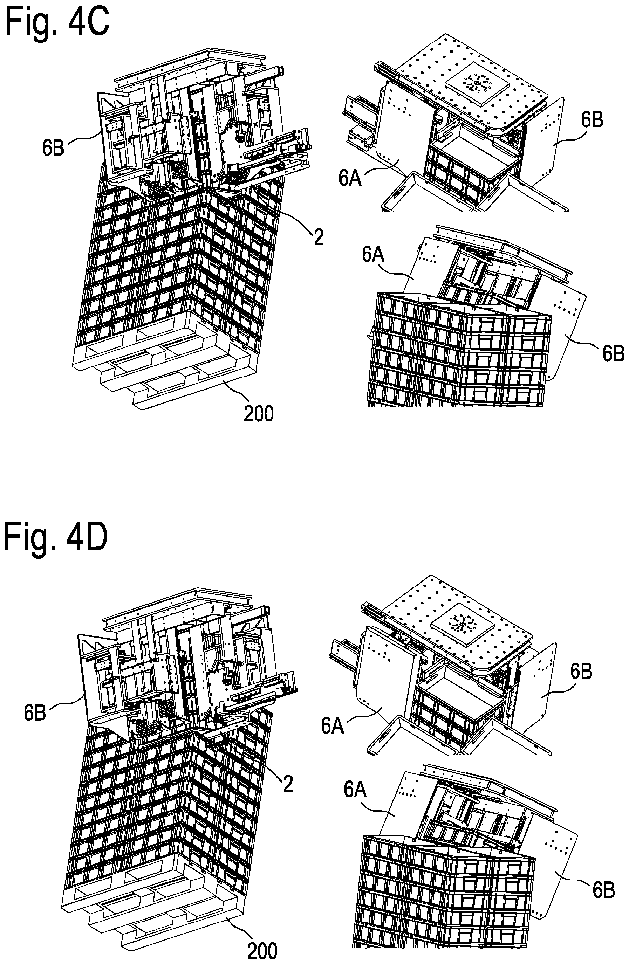

Anschließend wird der Greifer in Richtung einer Außenseite des Gebindestapels gekippt (Fig. 4B → Fig. 4C) und dann der Gebindestapel in der Unterfahrrichtung mit der Schaufel 2 teilweise unterfahren und gegebenenfalls in der Abstützrichtung verstellt und die Seitenbacken 6A, 6B entgegen ihrer jeweiligen Spannrichtung geöffnet (Fig. 4C → Fig. 4D).

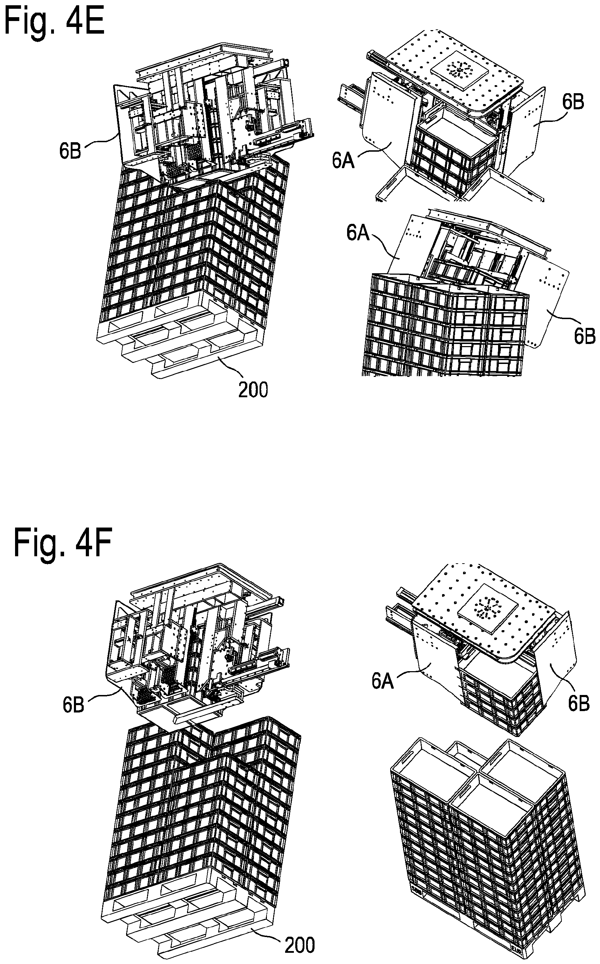

Anschließend wird der Greifer angehoben und quer zur Abstützrichtung von der Depalettierposition entfernt (Fig. 4D → Fig. 4E), die erste Seitenbacke 6A in der ersten Abdeckrichtung verstellt, um die erste Seitenfläche des Gebindestapels wenigstens teilweise zu übergreifen, die zweite Seitenbacke 6B in der zweiten Abdeckrichtung verstellt, um die zweite Seitenfläche des Gebindestapels wenigstens teilweise zu übergreifen, die erste Seitenbacke in der ersten Spannrichtung verstellt, um den Gebindestapel in der ersten Spannrichtung gegen die erste Abstützung einzuspannen, und die zweite Seitenbacke in der zweiten Spannrichtung quer zu der zweiten Abdeckrichtung verstellt, um den Gebindestapel in der zweiten Spannrichtung gegen die zweite Abstützung einzuspannen, und der Gebindestapel mit dem Greifer abtransportiert (Fig. 4E → Fig. 4F).

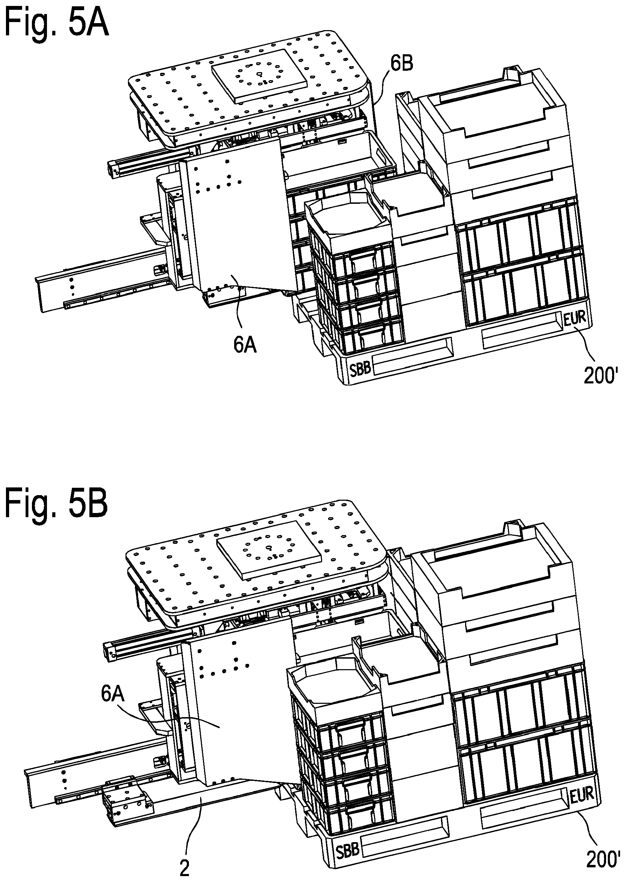

Fig. 5A-5D zeigen ein Palettieren nach einer Ausführung der vorliegenden Erfindung, das sich vorzugsweise direkt an das Depalettieren der Fig. 3A-3E bzw. 4A-4F anschließt.

Zunächst wird eine Palettierposition auf einem (Ziel-)Gebindeträger 200' mit dem mit einem Gebindestapel beladenen Greifer angefahren. Dann wird die Schaufel 2 entgegen der Unterfahrrichtung unter dem Gebindestapel herausgezogen (Fig. 5A → Fig. 5B).

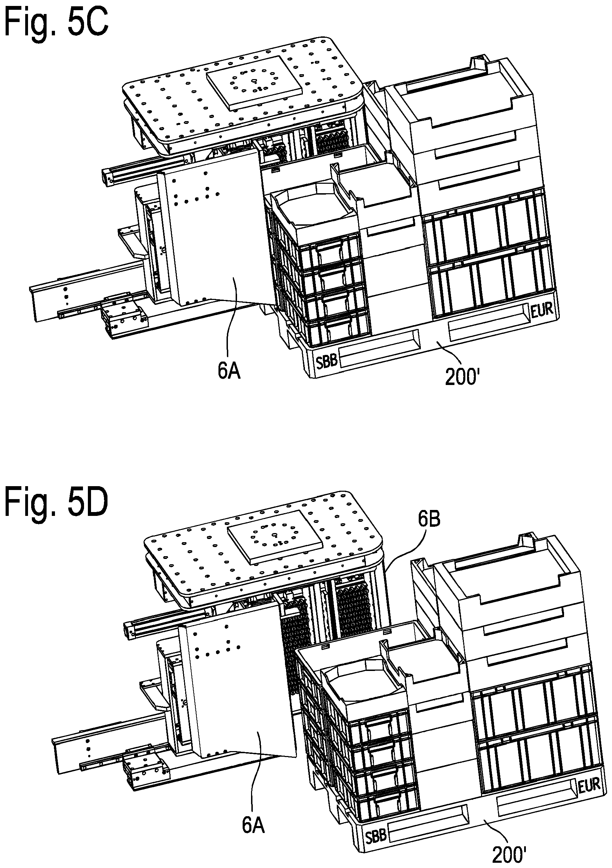

Nun wird die erste Seitenbacke 6A in der ersten Spannrichtung und die zweite Seitenbacke 6B in der zweiten Spannrichtung entspannt, um den Gebindestapel entgegen der Abstützrichtung abzusetzen, und anschließend entgegen ihrer Abdeckrichtung zurückgezogen (Fig. 5B → Fig. 5C).

Anschließend wird der Greifer weggefahren (Fig. 5C → Fig. 5D).

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezuqszeichenliste

- 1: Tragstruktur
- 2: Schaufel
- 3A-3E: Gebindestapel
- 3.1/3.2: erster/zweiter Seitenrand
- 31/32: erste/zweite Saugseite
- 3-1/3-2: erste/zweite Seitenfläche
- 4A/4B: erster/zweiter Stempel
- 5A/5B/5C: erster/zweiter/dritter Sauger
- 6A/6B: erste/zweite Seitenbacke
- 7A/7B: erste/zweite Abstützung
- 8: Träger
- 100: Roboter
- 200; 200': Gebindeträger

## Patentansprüche

1. Greifer zum Palettieren und/oder Depalettieren von Gebinden (3A-3E), insbesondere Gebinden mit verschiedenen Längen und/oder Breiten und/oder sowohl Gebinden mit wiederverwendbaren Ladungsträgern als auch Gebinden mit nicht wiederverwendbaren Ladungsträgern, mittels eines Roboters (100), wobei der Greifer aufweist:
eine, insbesondere obenliegende und/oder seitliche, Tragstruktur (1);
eine Schaufel (2), die relativ zu der Tragstruktur in einer Unterfahrrichtung reversibel verstellbar ist, um wenigstens ein Gebinde, insbesondere einen Gebindestapel (3A-3E), in einer Abstützrichtung quer zu der Unterfahrrichtung abzustützen;
wobei der Greifer weiter aufweist:
a) eine Stempelanordnung mit einem ersten Stempel (4A), der relativ zu der Tragstruktur in der Abstützrichtung reversibel verstellbar ist, um einen ersten Seitenrand (3.1) des Gebindes bzw. Gebindestapels gegensinnig zu der Abstützrichtung anzudrücken; und/oder
b) eine Saugeranordnung mit einem, insbesondere relativ zu der Tragstruktur in einer ersten Zustellrichtung quer zu der Abstützrichtung reversibel verstellbaren, ersten Sauger (5A), um quer zu der Abstützrichtung eine erste Saugseite (31) des Gebindes bzw. Gebindestapels anzusaugen; und/oder
c) eine Seitenbackenanordnung mit
einer ersten Seitenbacke (6A), die relativ zu der Tragstruktur in einer ersten Abdeckrichtung reversibel verstellbar ist, um eine erste Seitenfläche (3-1) des Gebindes bzw. Gebindestapels in der ersten Abdeckrichtung wenigstens teilweise zu übergreifen; und
einer zweiten Seitenbacke (6B), die relativ zu der Tragstruktur in einer zweiten Abdeckrichtung quer zu der ersten Abdeckrichtung reversibel verstellbar ist, um eine an die erste Seitenfläche angrenzende zweite Seitenfläche (3-2) des Gebindes bzw. Gebindestapels in der zweiten Abdeckrichtung wenigstens teilweise zu übergreifen.

2. Greifer nach Anspruch 1, wobei die erste Seitenbacke relativ zu der Tragstruktur in einer ersten Spannrichtung quer zu der Abstütz- und/oder der ersten Abdeckrichtung reversibel verstellbar ist, um das Gebinde bzw. den Gebindestapel in der ersten Spannrichtung gegen eine erste Abstützung (7A) einzuspannen, und die zweite Seitenbacke relativ zu der Tragstruktur in einer zweiten Spannrichtung quer zu der Abstütz- und/oder der zweiten Abdeckrichtung reversibel verstellbar ist, um das Gebinde bzw. den Gebindestapel in der zweiten Spannrichtung gegen eine, insbesondere relativ zu der Tragstruktur in der zweiten Spannrichtung reversibel verstellbare, zweite Abstützung (7B) einzuspannen.

3. Greifer nach einem der vorhergehenden Ansprüche, wobei:
die Schaufel relativ zu der Tragstruktur in Abstützrichtung reversibel verstellbar ist; und/oder
die Stempelanordnung einen zweiten Stempel (4B), der relativ zu der Tragstruktur in der Abstützrichtung reversibel verstellbar ist, um einen an den ersten Seitenrand angrenzenden zweiten Seitenrand (3.2) des Gebindes bzw. Gebindestapels gegensinnig zu der Abstützrichtung anzudrücken, aufweist; und/oder
die Saugeranordnung
einen, insbesondere relativ zu der Tragstruktur in einer zweiten Zustellrichtung quer zu der Abstützrichtung reversibel verstellbaren, zweiten Sauger (5B), um quer zu der Abstützrichtung eine an die erste Saugseite angrenzende zweite Saugseite (32) des Gebindes bzw. Gebindestapels anzusaugen; und/oder einen, insbesondere relativ zu der Tragstruktur in der ersten Zustellrichtung reversibel verstellbaren, dritten Sauger (5C), um die erste Saugseite bei Bedarf zusätzlich zu dem ersten Sauger anzusaugen;
aufweist.

4. Robotersystem mit einem Roboter (100) und einem daran angeordneten Greifer nach einem der vorhergehenden Ansprüche.

5. Verfahren zum Depalettieren von Gebinden (3A-3E), insbesondere Gebinden mit verschiedenen Längen und/oder Breiten und/oder Gebinden mit wiederverwendbaren Ladungsträgern und/oder Gebinden mit nicht wiederverwendbaren Ladungsträgern, mittels eines Robotersystems nach Anspruch 4, mit den Schritten:
- Anfahren einer Depalettierposition, insbesondere auf einem Gebindeträger (200) oder Fördermittel oder Stellplatz, mit dem, insbesondere unbeladenen, Greifer;
- Andrücken wenigstens eines Seitenrands wenigstens eines Gebindes, insbesondere Gebindestapels, gegensinnig zu der Abstützrichtung mit der Stempelanordnung;
- Kippen des Greifers in Richtung einer Außenseite des Gebindes bzw. Gebindestapels;
- wenigstens teilweises Unterfahren des Gebindes bzw. Gebindestapels in der Unterfahrrichtung mit der Schaufel; und
- Abtransportieren des Gebindes bzw. Gebindestapels mit dem Greifer.

6. Verfahren zum Depalettieren von Gebinden (3A-3E), insbesondere Gebinden mit verschiedenen Längen und/oder Breiten und/oder Gebinden mit wiederverwendbaren Ladungsträgern und/oder Gebinden mit nicht wiederverwendbaren Ladungsträgern, mittels eines Robotersystems nach Anspruch 4, mit den Schritten:
- Anfahren einer Depalettierposition, insbesondere auf einem Gebindeträger (200) oder Fördermittel oder Stellplatz, mit dem, insbesondere unbeladenen, Greifer;
- Ansaugen wenigstens einer Saugseite wenigstens eines Gebindes, insbesondere Gebindestapels, mit der Saugeranordnung quer zu Abstützrichtung;
- Kippen des Greifers in Richtung einer Außenseite des Gebindes bzw. Gebindestapels und/oder Anheben des Greifers;
- wenigstens teilweises Unterfahren des Gebindes bzw. Gebindestapels in der Unterfahrrichtung mit der Schaufel; und
- Abtransportieren des Gebindes bzw. Gebindestapels mit dem Greifer.

7. Verfahren nach Anspruch 5 oder 6, wobei nach dem Anheben bzw. Kippen des Greifers, insbesondere nach dem wenigstens teilweisen Unterfahren des Gebindes bzw. Gebindestapels in der Unterfahrrichtung mit der Schaufel, und/oder vor dem Abtransportieren des Gebindes bzw. Gebindestapels:
- die Schaufel in Abstützrichtung verstellt wird; und/oder
- die erste Seitenbacke in der ersten Abdeckrichtung verstellt wird, um die erste Seitenfläche des Gebindes bzw. Gebindestapels wenigstens teilweise zu übergreifen, und die zweite Seitenbacke in der zweiten Abdeckrichtung verstellt wird, um die zweite Seitenfläche des Gebindes bzw. Gebindestapels wenigstens teilweise zu übergreifen.

8. Verfahren nach einem der Ansprüche 5 bis 7, wobei die erste Seitenbacke in der ersten Spannrichtung verstellt wird, um das Gebinde bzw. den Gebindestapel in der ersten Spannrichtung gegen die erste Abstützung einzuspannen, und die zweite Seitenbacke in der zweiten Spannrichtung quer zu der zweiten Abdeckrichtung verstellt wird, um das Gebinde bzw. den Gebindestapel in der zweiten Spannrichtung gegen die zweite Abstützung einzuspannen.

9. Verfahren zum Depalettieren von Gebinden mit ersten, insbesondere wiederverwendbaren, Ladungsträgern und Gebinden mit hiervon verschiedenen, insbesondere nicht wiederverwendbaren, Ladungsträgern, wobei wenigstens ein Gebinde mit einem ersten, insbesondere wiederverwendbaren, Ladungsträger mittels eines Verfahrens nach Anspruch 5, insbesondere nach darauf rückbezogenem Anspruch 7 und/oder 8, und danach wenigstens ein Gebinde mit einem zweiten, insbesondere nicht wiederverwendbaren, Ladungsträger mittels eines Verfahrens nach Anspruch 6, insbesondere nach darauf rückbezogenem Anspruch 7 und/oder 8, mit dem Greifer depalettiert werden und/oder wobei wenigstens ein Gebinde mit einem zweiten, insbesondere nicht wiederverwendbaren, Ladungsträger mittels eines Verfahrens nach Anspruch 6, insbesondere nach darauf rückbezogenem Anspruch 7 und/oder 8, und danach wenigstens ein Gebinde mit einem ersten, insbesondere wiederverwendbaren, Ladungsträger mittels eines Verfahrens nach Anspruch 5, insbesondere nach darauf rückbezogenem Anspruch 7 und/oder 8, mit dem Greifer depalettiert werden.

10. Verfahren zum Palettieren von Gebinden (3A-3E), insbesondere Gebinden mit verschiedenen Längen und/oder Breiten und/oder Gebinden mit wiederverwendbaren Ladungsträgern und/oder Gebinden mit nicht wiederverwendbaren Ladungsträgern, mittels eines Robotersystems nach Anspruch 4, mit den Schritten:
- Anfahren einer Palettierposition, insbesondere auf einem Gebindeträger (200') oder Fördermittel oder Stellplatz, mit dem mit wenigstens einem Gebinde, insbesondere Gebindestapel (3A-3E), beladenen Greifer;
- Herausziehen der Schaufel entgegen der Unterfahrrichtung unter dem Gebinde bzw. Gebindestapel; und
- Wegfahren des Greifers.

11. Verfahren nach Anspruch 10, wobei nach dem Herausziehen der Schaufel und vor dem Wegfahren des Greifers die erste Seitenbacke in der ersten Spannrichtung und die zweite Seitenbacke in der zweiten Spannrichtung entspannt wird, um das Gebinde bzw. den Gebindestapel entgegen der Abstützrichtung abzusetzen, und/oder, insbesondere nach diesem Entspannen, die erste Seitenbacke entgegen der ersten Abdeckrichtung und die zweite Seitenbacke entgegen der zweiten Abdeckrichtung verstellt wird.

12. Verfahren nach Anspruch 10 oder 11, wobei der Greifer vor dem Anfahren der Palettierposition mit dem wenigstens einen Gebinde, insbesondere Gebindestapel, durch Depalettieren, insbesondere nach einem Verfahren nach einem der Ansprüche 5 bis 9, oder an einem Abholplatz, welcher ein Unterfahren des Gebindes mit der Schaufel ohne Anheben und ohne Kippen ermöglicht, beladen wird, insbesondere der Greifer nach einem Depalettieren nach einem Verfahren nach einem der Ansprüche 5 bis 9 das dabei depalletierte Gebinde bzw. den dabei depalletierten Gebindestapel ohne zwischenzeitliches Abladen an der Palettierposition, insbesondere auf den Gebindeträger bzw. das Fördermittel bzw. den Stellplatz, palettiert.

13. Verfahren nach einem der Ansprüche 5 bis 12, wobei die zweite Abstützung in der zweiten Spannrichtung verstellt wird, um den Greifer an unterschiedliche Gebinde mit verschiedenen Längen und/oder Breiten anzupassen.

14. Verfahren nach einem der Ansprüche 5 bis 13, wobei eine oder mehrere Saugöffnungen der Saugeranordnung, insbesondere infolge einer Erfassung einer fehlenden Wirkfläche, deaktiviert werden.

15. Verfahren nach einem der Ansprüche 5 bis 14, wobei das wenigstens eine Gebinde Frischware aufweist.
